# EUROPÄISCHE PATENTANMELDUNG

(11) **EP 2 832 668 A1**
(43) Veröffentlichungstag der Anmeldung: **04.02.2015**
(21) Anmeldenummer: 13178460.5
(22) Anmeldetag: 30.07.2013
(51) Int. Cl.: B65G 59/00, G01N 35/00, A63B 47/00, B07C 5/00

(54) **Vorrichtung zur Vereinzelung von kugel- oder zylinderförmigen Objekten**

(71) Anmelder: Siemens Healthcare Diagnostics Products GmbH, 35041 Marburg (DE)
(72) Erfinder: Wilmes, Hugo, 65812 Bad Soden (DE); Meindl, Josef, 65760 Eschborn (DE)

(57) **Zusammenfassung**

Eine Vorrichtung (1) zur Vereinzelung von stab- oder kugelförmigen Rührelementen in einem automatischen Analysegerät ermöglicht eine schnelle und fehlerresistente Vereinzelung und eine automatisierte Bestückung von Küvetten mit den Rührelementen. Dazu umfasst sie einen mit einer Bohrung (24) versehenen Hebel (14), wobei die Bohrung (24) derart ausgestaltet ist, dass sie eines der Rührelemente aufnehmen kann. Die Bohrung (24) ist in einer ersten Position des Hebels (14) unter einer Eintrittsöffnung angeordnet und in einer zweiten Position des Hebels (14) über einer Austrittsöffnung (32) angeordnet, wobei der Hebel (14) in der zweiten Position die Eintrittsöffnung verschließt.

## Beschreibung

Die Erfindung betrifft eine Vorrichtung zur Vereinzelung von kugel- oder zylinderförmigen Objekten im Allgemeinen und von magnetisch anziehbaren Rührkugeln oder Rührstäbchen in einem automatischen Analysegerät im Besonderen.

Zahlreiche Nachweis- und Analyseverfahren zur Bestimmung physiologischer Parameter in Körperflüssigkeitsproben wie Blut, Plasma, Serum oder Urin oder in anderen biologischen Proben werden heute automatisiert in entsprechenden Analysegeräten durchgeführt.

Heutige Analysegeräte sind in der Lage, eine Vielzahl verschiedenartiger Nachweisreaktionen und Analysen mit einer Vielzahl von Proben durchzuführen. Gängige Analysegeräte, wie sie im klinischen Labor oder in Blutbanken zum Einsatz kommen, umfassen üblicherweise einen Bereich für die Zuführung von Probengefäßen, die die zu analysierenden Primärproben enthalten. Zur Einspeisung der Probengefäße in das Analysegerät ist üblicherweise ein Transportsystem vorgesehen, das die Probengefäße zunächst zu einer Probenidentifikationseinrichtung transportiert, die probenspezifische Informationen, die auf einem Probengefäß angebracht sind, erfasst und in eine Speichereinheit weiterleitet. Anschließend werden die Probengefäße zu einer Probenentnahmestation transportiert. Mit Hilfe einer Probenpipettiereinrichtung wird dort mindestens ein Aliquot der Probenflüssigkeit aus einem Probengefäß entnommen und in ein Reaktionsgefäß transferiert.

Bei den Reaktionsgefäßen handelt es sich in der Regel um Einwegküvetten, die in einem Küvettenbehälter im Analysegerät vorrätig gehalten werden und die automatisch aus dem Vorratsbehälter in definierte Aufnahmepositionen transferiert werden. Die Reagenzien, die für die Bereitstellung von verschiedenartigen, testspezifischen Reaktionsansätzen erforderlich sind, befinden sich in Reagenzbehältern, die in einer Reagenzstation aufbewahrt werden. Die Reagenzbehälter werden dem Analysegerät entweder automatisch oder manuell zugeführt.

Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien im Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Je nach Art der durchgeführten Untersuchung kann eine Durchmischung der in einem Reaktionsgefäß befindlichen Flüssigkeit erforderlich sein. Auch die Durchmischung von Flüssigreagenzien, die beispielsweise sedimentierende Bestandteile, wie z.B. partikuläre Festphasen, enthalten, kann erforderlich sein. Hierzu kommen üblicherweise Magnetrührer zur Anwendung. Hierbei rotiert ein Magnet unter dem entsprechenden Reaktionsgefäß oder Reagenzbehälter mit regelbarer Geschwindigkeit. In dem Reaktionsgefäß oder Reagenzbehälter befindet sich ein stabförmiges, üblicherweise zylindrisches, oder kugelförmiges ferromagnetisches Rührelement, welches durch die magnetische Kraft des rotierenden Magneten ebenfalls in Rotation versetzt wird und so die Flüssigkeit in dem Reaktionsgefäß oder Reagenzbehälter in Bewegung setzt.

Im Stand der Technik werden die Rührelemente entweder manuell vom Anwender in die Reaktionsgefäße eingeführt, oder es werden Reaktionsgefäße bereitgestellt, die bereits ein oder mehrere Rührelemente enthalten.

Aufgrund der Vielzahl von durchzuführenden Testen in einem automatischen Analysegerät ist es wünschenswert, Küvetten automatisiert mit einzelnen Rührelementen zu bestücken.

Dazu können die Rührelemente in einem ersten Schritt in der Art eines Magazins aufgereiht werden, beispielsweise derart, dass sie in einem Schlauch oder Röhrchen entlang ihrer Achse aufgereiht vorliegen. Dies kann entweder extern durchgeführt werden, so dass entsprechende Rührelementmagazine in das automatische Analysegerät eingesetzt werden, oder das Analysegerät kann selbst eine Vorrichtung umfassen, die Rührelemente als Schüttgut aufnimmt und diese in einem Schlauch zur einzelnen Entnahme aufreiht.

In beiden Fällen muss jedoch sichergestellt werden, dass die in dem Schlauch aufgereihten Rührelemente einzeln entnommen und zuverlässig bedarfsgerecht den jeweils gewünschten Küvetten zugeführt werden können.

Es ist daher Aufgabe der Erfindung, eine Vorrichtung bereit zu stellen, die eine schnelle und fehlerresistente Vereinzelung von Rührelementen und eine automatisierte Bestückung von Küvetten mit den Rührstäbchen erlaubt.

Diese Aufgabe wird erfindungsgemäß gelöst, indem die Vorrichtung einen mit einer Bohrung versehenen Hebel umfasst, wobei die Bohrung derart ausgestaltet ist, dass sie ein Rührelement aufnehmen kann. Die Bohrung ist in einer ersten Position des Hebels unter einer Eintrittsöffnung angeordnet und in einer zweiten Position des Hebels über einer Austrittsöffnung angeordnet, wobei der Hebel in der zweiten Position die Eintrittsöffnung verschließt.

Gegenstand der vorliegenden Erfindung ist daher eine Vorrichtung zur Vereinzelung von stab- oder kugelförmigen Objekten umfassend einen mit einer Bohrung versehenen Hebel, wobei die Bohrung derart ausgestaltet ist, dass sie ein stab-oder kugelförmiges Objekt aufnehmen kann. Die Bohrung ist in einer ersten Position des Hebels unter einer Eintrittsöffnung angeordnet und in einer zweiten Position des Hebels über einer Austrittsöffnung angeordnet, wobei der Hebel in der zweiten Position die Eintrittsöffnung verschließt.

Eine erfindungsgemäße Vorrichtung eignet sich beispielsweise besonders zur Vereinzelung von stab- oder kugelförmigen Rührelementen, wie Rührstäbchen oder Rührkugeln oder auch zur Vereinzelung von Reaktionsgefäßen.

Es wurde gefunden, dass eine zuverlässige Vereinzelung zunächst durch eine passgenaue Aufnahme für einzelne stab-oder kugelförmigen Objekte in Form einer entsprechenden, an die Objekte angeformten Bohrung möglich ist. Die Bohrung ist dabei an einem Hebel angeordnet, so dass sie bewegt werden kann. In der ersten Position fällt eines der Objekte aus dem Schlauch in die Bohrung. Wird der Hebel durch Anforderung von der Steuereinheit in die zweite Position bewegt, wird der Austritt des Schlauches zunächst verschlossen, so dass kein weiteres Objekt nachfolgt. Die Bohrung wird hingegen über eine Austrittsöffnung gebracht, so dass das einzelne Objekt herausfällt. Unter der Austrittsöffnung ist eine Küvette angeordnet. Bei der Rückbewegung des Hebels gelangt die nun entleerte Bohrung wieder unter den Schlauch und ein neues Objekt fällt in die Bohrung. Dies bietet einen einfachen und zuverlässigen Mechanismus zur Entnahme einzelner Objekte aus dem Schlauch.

In vorteilhafter Ausgestaltung ist der Hebel an der Vorrichtung schwimmend gelagert, und die Vorrichtung weist eine erste Zentriervorrichtung zur Zentrierung der Bohrung unter der Eintrittsöffnung in der ersten Position des Hebels auf. Aufgrund der geringen Größe von Objekten wie magnetischen Rührstäbchen oder Rührkugeln in einem automatischen Analysegerät und dem Erfordernis der hohen Passgenauigkeit der Bohrung ist es technisch äußerst schwierig, die Drehachse des Hebels bei einer festen Lagerung so zu justieren, dass stets eine genaue Zentrierung der Bohrung unterhalb der Eintrittsöffnung erfolgt. Die Fertigungstoleranzen bei der Produktion der Bauteile und bei der Montage sind hierbei typischerweise zu groß, um eine derartige Justierung zuverlässig zu gewährleisten. Daher sollte auf eine schwimmende Lagerung, d.h. eine Lagerung mit einem vorgegebenen geringen Spiel zurückgegriffen werden, so dass die Position der Bohrung beim Erreichen der ersten Position durch den Hebel ebenfalls ein gewisses Spiel aufweist. Hier sollte dann eine Zentriervorrichtung vorgesehen sein, die beispielsweise durch eine entsprechende Führung eine Zentrierung der Bohrung unter der Eintrittsöffnung erreicht.

In analoger Weise ist eine derartige Ausgestaltung auch in der zweiten Position vorteilhaft vorgesehen. Dazu weist in zusätzlicher oder alternativer vorteilhafter Ausgestaltung die Vorrichtung eine zweite Zentriervorrichtung zur Zentrierung der Bohrung über der Austrittsöffnung in der zweiten Position des Hebels auf. Auch hier wird somit die Passgenauigkeit der Bohrung über der Austrittsöffnung gewährleistet, so dass die Objekte zuverlässig aus der Bohrung herausfallen.

Eine besonders einfache Ausgestaltung der Zentriervorrichtung ergibt sich, indem diese eine um die Bohrung auf dem Hebel angeordnete kreiszylinderförmige Erhebung und eine um die jeweilige Öffnung angeordnete keilförmige Vertiefung aufweist. Wird die kreisförmige Erhebung bei der Bewegung in die jeweilige Position in den sich verjüngenden Keil geführt, gelangt sie auch bei unterschiedlichen Ausgangspositionen aufgrund der Symmetrie stets in die gleiche Endposition, so dass die Positionierung stets gewährleistet ist. Für eine weitere Optimierung kann die Keilform im Endbereich auch abgerundet sein, so dass sie sich in der Endposition der kreisförmigen Erhebung anformt.

Eine weitere Verbesserung der Passgenauigkeit insbesondere hinsichtlich der Toleranzen bei der Herstellung ist erreichbar, indem die jeweilige Erhebung vorteilhafterweise die Fortsetzung einer die jeweilige Öffnung umschließenden, kreiszylinderförmigen Hülse ist. Mit anderen Worten: Die Ein- und/oder Austrittsöffnung befindet sich jeweils in einer hohlzylindrischen Hülse, die mit vergleichsweise kleinen Toleranzen gefertigt werden kann. Die Hülse ist in einer entsprechenden Bohrung an der Vorrichtung angeordnet und ragt über den Rand der Bohrung hinaus, so dass sich die beschriebene Erhebung ergibt.

Der Abstand des Mittelpunkts der Bohrung zu beiden Kanten der Vertiefung entspricht vorteilhafterweise dem Radius der Erhebung. Der Abstand bemisst sich hierbei als kürzeste Strecke von dem Mittelpunkt zu einem Punkt der Kante. Hierdurch ergibt sich die gewünschte genaue Justierung der Bohrung über der Austrittsöffnung bzw. unter der Eintrittsöffnung.

In vorteilhafter Ausgestaltung umfasst die Vorrichtung eine dem Hebel zugeordnete, magnetische Betätigungsvorrichtung. Eine Betätigung des Hebels mittels eines Elektromagneten ist technisch einfach realisierbar und vergleichsweise schnell. Durch die berührungslose Kraftübertragung wird die schwimmende Lagerung ermöglicht, da hier keine Einschränkungen hinsichtlich der Bewegung hingenommen werden müssen.

Die Vorrichtung umfasst weiterhin vorteilhafterweise einen über der Eintrittsöffnung angeordneten Füllstandssensor. Dieser kann beispielsweise in der Art einer Lichtschranke ausgestaltet sein. Hierdurch kann durch die Steuereinrichtung der Vorrichtung ermittelt werden, ob ausreichend Objekte im Vorrat oberhalb der Eintrittsöffnung aufgestapelt sind. Falls keine Objekte vorliegen, kann rechtzeitig ein Austausch durch den Benutzer vorgenommen werden oder eine Nachförderung aus dem Schüttgut erfolgen.

Weiterhin umfasst die Vorrichtung vorteilhafterweise einen unter der Austrittsöffnung angeordneten Sensor für den Durchtritt von Objekten. Auch dieser Sensor kann beispielsweise in der Art einer Lichtschranke ausgestaltet sein. Hierdurch kann durch die Steuereinrichtung der Vorrichtung ermittelt werden, ob tatsächlich ein Objekt bei einer Betätigung des Hebels ausgegeben wird. Falls durch eine Betriebsstörung einmal kein Objekt ausgeworfen wurde, kann der Hebel beispielsweise erneut betätigt werden. Sollte nach mehreren Versuchen kein Objekt ausgegeben werden, deutet dies beispielsweise auf ein in der Bohrung verkeiltes Objekt hin, und es kann ein entsprechender Hinweis an den Benutzer erfolgen.

Ein weiterer Gegenstand der vorliegenden Erfindung ist ein automatisches Analysegerät, das eine beschriebene Vorrichtung zur Vereinzelung von Rührelementen, bevorzugt von magnetisch anziehbaren Rührstäbchen oder Rührkugeln umfasst.

Die mit der Erfindung erzielten Vorteile bestehen insbesondere darin, dass durch die durch einen einfachen Hebel mit einer Bohrung erfolgende Vereinzelung von Rührelementen aus einem aufgestapelten Vorrat eine besonders einfache und zuverlässige Bestückung von Küvetten mit Rührelementen in einem automatischen Analysegerät erfolgen kann. Die Vorrichtung ist weitgehend verschleißfrei und funktionssicher.

Die Erfindung wird anhand einer Zeichnung näher erläutert. Darin zeigen:
- FIG 1: eine erfindungsgemäße Vorrichtung mit einem Hebel zur einzelnen Entnahme von Rührelementen aus einem Schlauch in demontiertem Zustand,
- FIG 2: den Hebel in montiertem Zustand, und
- FIG 3: den demontierten Hebel aus FIG 2 in anderer Ansicht.

Gleiche Teile sind in allen Figuren mit denselben Bezugszeichen versehen.

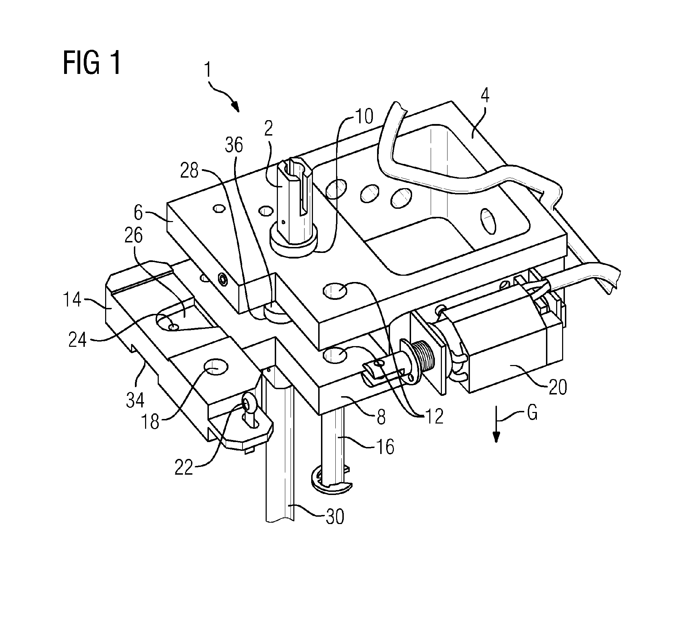

Die FIG 1 bis 3 erläutern die einzelnen Teile einer Vorrichtung 1 zur Vereinzelung von Rührelementen in einem nicht näher dargestellten Analysegerät. Die Rührelemente, die mit der Vorrichtung 1 vereinzelt und in Reaktionsgefäße abgegeben werden sollen, sind zylindrisch und haben eine Länge von 4 mm und einen Durchmesser von 1 mm. Sie sind aus einem ferromagnetischen Material gefertigt und werden als Schüttgut dem automatischen Analysegerät zugeführt. Hier werden sie durch eine nicht näher dargestellte Vorrichtung in einen ebenfalls nicht dargestellten Schlauch geführt, dessen Innendurchmesser dem Durchmesser der Rührelemente entspricht, so dass die Rührelemente entlang des Schlauches nach unten gleiten und im Schlauch aufgereiht sind. Die Rührelemente werden im Folgenden auch als Rührstäbchen bezeichnet.

Der Schlauch ist flexibel und kann je nach Einbausituation entsprechend verlängert oder gekürzt werden. Am Austritt des Schlauches ist eine Befestigungsvorrichtung angeordnet, die mit der in FIG 1 gezeigten Hülse 2 verbunden wird. Die Hülse 2 ist im wesentlichen hohlzylinderförmig ausgestaltet und weist eine Befestigungsmöglichkeit für den Schlauch auf. Der Innendurchmesser im unteren Teil der Hülse 2 entspricht dem des Schlauches. Die Rührstäbchen treten somit aus dem Schlauch aus und stapeln sich in der Hülse 2, die daher auch als Einführhülse bezeichnet wird.

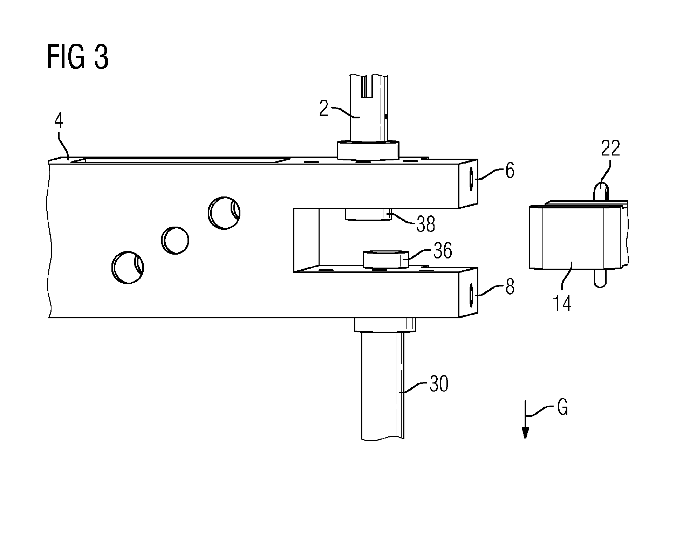

Der in FIG 1 gezeigte Teil umfasst zunächst einen zentralen Befestigungsrahmen 4, von dem aus sich zwei planparallele, horizontal ausgerichtete Platten 6, 8 erstrecken. Befestigungsrahmen 4 und Platten 6, 8 sind einteilig ausgeführt. Die obere Platte 6 umfasst eine Bohrung 10, in der die Hülse 2 angeordnet ist. Die Hülse 2 tritt dabei auf der anderen Seite der oberen Platte 6 aus, so dass sich hier eine Erhebung 38 bildet, die in FIG 3 gezeigt und im Folgenden noch näher beschrieben ist.

Gegenüber der Hülse 2 horizontal versetzt sind in den Platten 6, 8 konzentrische Bohrungen 12 zur Lagerung eines Hebels 14 mittels eines Bolzens 16 vorgesehen. Der Hebel 14 ist dabei schwimmend gelagert, indem er ein Langloch 18 aufweist, durch das der Bolzen 16 durchtritt. Das Langloch 18 erlaubt ein Spiel in der Lagerung. Ein am Befestigungsrahmen 4 angeordneter Magnetschalter 20 ist über einen Splint 22 mit dem Hebel 14 derart verbunden, dass er den Hebel 14 betätigen kann.

Der Hebel 14 wird dabei von dem Magnetschalter 20 zwischen einer ersten und einer zweiten Position bewegt. Die Bewegung wird von einer Steuereinrichtung des automatischen Analysegeräts gesteuert. Der Hebel 14 weist eine Bohrung 24 auf, die in der ersten Position unterhalb der Einführhülse 2 liegt. Die Bohrung 24 entspricht in ihrem Durchmesser dem eines Rührstäbchens. Die Höhe der Bohrung 24 entspricht in etwa einer Länge eines Rührstäbchens. Auf der Oberseite des Hebels 14 ist eine Vertiefung 26 um die Bohrung 24 herum angeordnet.

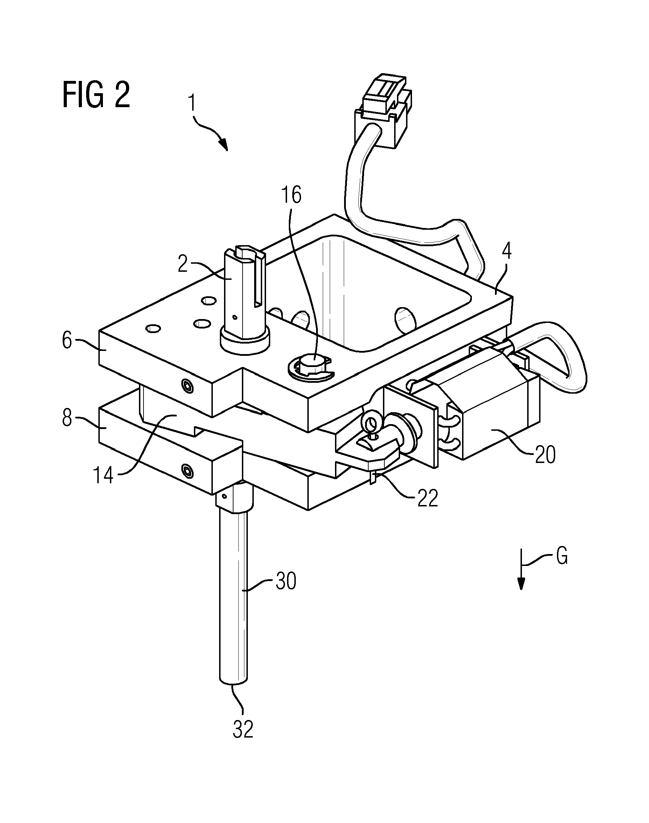

Die untere Platte 8 weist ebenfalls eine Bohrung 28 auf, in die eine nach unten erstreckte hohlzylindrische Hülse 30 mit einer in FIG 2 gezeigten Austrittsöffnung 32 angeschlossen ist. Die Bohrung 28 ist gegenüber der Bohrung 10 der Hülse 2 in der oberen Platte 6 versetzt angeordnet. Analog zur Hülse 2 erstreckt sich jedoch die Hülse 30 ebenfalls in den Zwischenraum zwischen den Platten 6, 8, so dass sich hier eine eine kreiszylindrische Erhebung 36 bildet. Die Bohrung 24 im Hebel 14 ist in der zweiten Position des Hebels 14 über der Hülse 30 angeordnet.

Auf der Unterseite des Hebels 14 ist eine analog zur Vertiefung 26 ausgebildete Vertiefung 34 um die Bohrung 24 herum angeordnet. Sie ist ebenso keilförmig mit abgerundeter Spitze ausgeführt, jedoch weist die Öffnungsrichtung des Keils hierbei in die entgegengesetzte Bewegungsrichtung des Hebels 14.

Die jeweiligen Vertiefungen 26, 34 sind bezüglich der durch die Hülsen 2, 30 gebildeten Erhebungen 38, 36 folgendermaßen ausgestaltet: Die abgerundeten Spitzen der Keile weisen denselben Radius wie die Erhebungen 38, 36 auf. Daran anschließend vergrößern die Kanten des jeweiligen Keils ihren Abstand. Wird der Hebel 14 also horizontal in die jeweilige Vertiefung 26, 34 bewegt, wird die Erhebung 38, 36 automatisch in der abgerundeten Spitze des Keils zentriert.

Die in FIG 1 gezeigte Vorrichtung 1 ist in FIG 2 im zusammengebauten Zustand gezeigt. FIG 3 zeigt noch einmal die Explosionszeichnung aus FIG 1 in horizontaler Ansicht. Hier ist der Versatz der Hülsen 2, 30 und die ihnen zugehörigen Erhebungen 36, 38 erkennbar. In der Erhebung 36 der Hülse 30 ist die Austrittsöffnung für die Rührstäbchen zentriert, in der Erhebung 38 der Hülse 2 die Eintrittsöffnung, über der die Rührstäbchen gestapelt sind und die nach und nach in die Bohrung 24 fallen.

Noch einmal soll die dadurch erreichte Zentrierung erläutert werden: In Form der Erhebungen 36, 38 erstrecken sich die Hülsen 2, 30 in den Bereich zwischen den Platten 6, 8 hinein. Die kreiszylindrischen Erhebungen 36, 38 greifen in die Vertiefungen 26 bzw. 34 ein. Die Vertiefungen 26, 34 sind dabei entgegengesetzt keilförmig. Durch das Langloch 18 ist der Hebel 14 schwimmend gelagert, d.h. hinsichtlich seiner Achse nur in gewissen vorgegebenen Grenzen mit Spiel fixiert. Durch die Keilform der Vertiefungen 26, 34 erfolgt nun in jeder Endposition des Hebels 14 durch das Eingreifen in die Erhebungen 36, 38 eine automatische, hochgenaue Zentrierung, so dass die Rührstäbchen ohne zu verkeilen hindurch fallen können.

Anhand der FIG 1 bis 3 wird die Funktionsweise der Vorrichtung 1 erläutert: Im Ruhezustand befindet sich der Hebel 14 in der ersten Position. Die in den Schlauch geführten Rührstäbchen fallen nach unten. Eines der Rührstäbchen fällt aus der Hülse 2 in die Bohrung 24. Es steht dabei auf der Erhebung 36 der Hülse 30 auf. Die übrigen Rührstäbchen im Schlauch bzw. innerhalb der Hülse 2 stapeln sich über dem in der Bohrung 24 befindlichen Rührstäbchen.

Soll nun ein Rührstäbchen aus der Austrittsöffnung 32 in eine Küvette gegeben werden, wird von der Steuereinheit der Magnetschalter 20 aktiviert. Dieser bewegt den Hebel 14 in die zweite Position. Die Bohrung 24 befindet sich nun über der Hülse 30, und das Rührstäbchen fällt nach unten. Der Hebel 14 verschließt in dieser Position die Eintrittsöffnung der Einführhülse 2, so dass keine Rührstäbchen nachfallen. Erst nach der Rückbewegung in die erste Position, wenn die Bohrung 24 unterhalb der Hülse 2 liegt, kann ein weiteres Rührstäbchen in die Bohrung 24 nachrücken.

Im Bereich der Hülse 2 und der Hülse 30 sind in der Art einer Lichtschranke ausgestaltete, nicht näher dargestellte Sensoren angeordnet. Der Sensor in der Hülse 2 überwacht den Füllstand der Hülse 2, d.h. ob noch genügend Vorrat an Rührstäbchen vorliegt. Wird der Hebel 14 betätigt, wird mittels des Sensors in der Hülse 30 von der Steuereinheit überprüft, ob ein Rührstäbchen abgegeben wurde. Ist dies nicht der Fall, wird der Hebel erneut betätigt. Wird bei mehreren Versuchen kein Rührstäbchen abgegeben, liegt eine Fehlfunktion vor, und es wird ein Benutzeralarm ausgelöst.

### BEZUGSZEICHENLISTE

- 1: Vorrichtung
- 2: Hülse
- 4: Befestigungsrahmen
- 6, 8: Platte
- 10, 12: Bohrung
- 14: Hebel
- 16: Bolzen
- 18: Langloch
- 20: Magnetschalter
- 22: Splint
- 24: Bohrung
- 26: Vertiefung
- 28: Bohrung
- 30: Hülse
- 32: Austrittsöffnung
- 34: Vertiefung
- 36, 38: Erhebung
- G: Gravitation

## Patentansprüche

1. Vorrichtung (1) zur Vereinzelung von stab- oder kugelförmigen Objekten, umfassend einen mit einer Bohrung (24) versehenen Hebel (14), wobei die Bohrung (24) derart ausgestaltet ist, dass sie ein stab- oder kugelförmiges Objekt aufnehmen kann, und wobei die Bohrung (24) in einer ersten Position des Hebels (14) unter einer Eintrittsöffnung angeordnet ist und in einer zweiten Position des Hebels (14) über einer Austrittsöffnung (32) angeordnet ist, wobei der Hebel (14) in der zweiten Position die Eintrittsöffnung verschließt.

2. Vorrichtung (1) nach Anspruch 1, bei der der Hebel (14) an der Vorrichtung (1) schwimmend gelagert ist und die Vorrichtung (1) eine erste Zentriervorrichtung zur Zentrierung der Bohrung (24) unter der Eintrittsöffnung in der ersten Position des Hebels (14) aufweist.

3. Vorrichtung (1) nach Anspruch 1 oder 2, bei der der Hebel (14) an der Vorrichtung (1) schwimmend gelagert ist und die Vorrichtung (1) eine zweite Zentriervorrichtung zur Zentrierung der Bohrung (24) über der Austrittsöffnung (32) in der zweiten Position des Hebels (14) aufweist.

4. Vorrichtung (1) nach Anspruch 2 oder 3, bei der die jeweilige Zentriervorrichtung eine um die Bohrung (24) auf dem Hebel (14) angeordnete, kreiszylinderförmige Erhebung (36, 38) und eine um die jeweilige Öffnung angeordnete keilförmige Vertiefung (26, 34) aufweist.

5. Vorrichtung (1) nach Anspruch 4, bei der die jeweilige Erhebung (36, 38) die Fortsetzung einer die jeweilige Öffnung umschließenden, kreiszylinderförmigen Hülse (2, 30) ist.

6. Vorrichtung (1) nach Anspruch 4 oder 5, bei der der Abstand des Mittelpunkts der Bohrung (24) zu beiden Kanten der Vertiefung (26, 34) dem Radius der Erhebung (36, 38) entspricht.

7. Vorrichtung (1) nach einem der vorhergehenden Ansprüche, umfassend eine dem Hebel (14) zugeordnete, magnetische Betätigungsvorrichtung (20).

8. Vorrichtung (1) nach einem der vorhergehenden Ansprüche, umfassend einen über der Eintrittsöffnung angeordneten Füllstandssensor.

9. Vorrichtung (1) nach einem der vorhergehenden Ansprüche umfassend einen unter der Austrittsöffnung (32) angeordneten Sensor für den Durchtritt vonstab- oder kugelförmigen Objekten.

10. Vorrichtung (1) nach einem der vorhergehenden Ansprüche zur Vereinzelung von magnetisch anziehbaren stab- oder kugelförmigen Rührelementen.

11. Verwendung einer Vorrichtung (1) nach einem der vorhergehenden Ansprüche zur Vereinzelung von magnetisch anziehbaren stab- oder kugelförmigen Rührelementen in einem automatischen Analysegerät.

12. Automatisches Analysegerät mit einer Vorrichtung (1) nach einem der Ansprüche 1 bis 10.
